# EUROPEAN PATENT SPECIFICATION

(11) **EP 2 657 688 B1**
(45) Date of publication and mention of the grant of the patent: **20.07.2016**
(21) Application number: 13164731.5
(22) Date of filing: 22.04.2013
(51) Int. Cl.: G01N 21/85, C01G 23/053, G01N 15/02

(54) **Device for detecting hydrolysis of titanium oxysulfate in real-time**
Vorrichtung zur Hydrolyseerkennung von Titanoxysulfat in Echtzeit
Dispositif pour détecter l'hydrolyse d'oxysulfate de titane en temps réel

(30) Priority: 24.04.2012 CN 201210122049
(43) Date of publication of application: 30.10.2013
(73) Proprietor: Pangang Group Panzhihua Iron & Steel Research Institute Co., Ltd., Sichuan 617000 (CN)
(72) Inventor: Ma, Weiping, 617000 Panzhihua (CN); Shui, Bigang, 617000 Panzhihua (CN); Ren, Yaping, 617000 Panzhihua (CN); Lu, Ruifang, 617000 Panzhihua (CN); Du, Jianqiao, 617000 Panzhihua (CN); Luo, Zhiqiang, 617000 Panzhihua (CN)
(74) Representative: Nordmeyer, Philipp Werner

(56) References cited:
- EP-A2- 0 184 269
- WO-A1-89/05977
- GB-A- 1 335 537
- JP-A- 2011 178 658
- US-A- 3 232 711
- US-A- 3 821 430
- US-A1- 2009 213 372
- US-B1- 6 576 911

## Description

### BACKGROUND

### 1. Field

The present invention relates to the field of manufacturing titanium white using a sulfuric acid-process, more particularly, to a device capable of detecting a change point of color to gray during hydrolysis of titanium oxysulfate in real-time and an apparatus capable of controlling hydrolysis of titanium oxysulfate.

### 2. Description of the Related Art

Up to now, there have been more than 70 domestic plants manufacturing titanium white with production of up to 1.5 million tons/a, and 98% of the plants use a sulfuric acid-process for manufacturing titanium white. In the manufacture of titanium white using the sulfuric acid-process, a hydrolysis process is one of the most important factors affecting product quality, and attracts great attention at home. Further, a change point of color to gray is the key of the hydrolysis process, and the determination of the change point of color to gray directly affects the final quality of titanium white powder.

According to investigation, the determination of the change point of color to gray is performed mostly by an observation with naked eyes in the domestic plants. The determination by means of the observation with naked eyes is strongly subjective, resulting in great difference in quality among various batches of products, and thus deteriorated overall stability of products. Also, a minority of the plants determine the change point of color to gray according to time. Although the determination by means of time precludes subjective factors, it may also result in difference in quality among various batches of products and deteriorated stability of products since a titaniferous solution, a temperature thereof, and the like are variable. In addition, the change in color of the titaniferous solution to gray is in close relation to parameters of the titaniferous solution as well as operating conditions, and thus it is very difficult to determine the change point of color to gray. There is an urgent need for an apparatus for determining the change point of color to gray during the hydrolysis of the titaniferous solution without difference in product quality due to manual determination.

British Patent Publication No. 1335537 discloses a method of determining the change point of color to gray during the hydrolysis of the titaniferous solution by measuring reflectance using a green filter. In the method, a thick glass window is formed on a hydrolysis tank, a light source irradiates light to the titaniferous solution through an observation hole, reflected light is detected by a differential colorimeter, and an inflection point in the curve of reflectance shows the change point of color to gray. However, the observation hole may be easily contaminated by viscous particles, limiting the use of the method.

Chinese Patent Publication No. 101793679A discloses a device of determining the change point of color to gray, more particularly, determining a critical point of the hydrolysis of the titaniferous solution by measuring a transmittance of the titaniferous solution using a spectrophotometer. However, the device requires complicated operations. Also, the titaniferous solution is drawn from the hydrolysis tank and introduced into a detecting unit so that the detected titaniferous solution is separated from an original hydrolysis environment, and the detection lags behind the hydrolysis to some extent. EP 0 184 269 A2 discloses a fiber optic probe and a method for determining the size and concentration of materials in suspension.

### SUMMARY

An objective of the present invention is to address one or more of the above-mentioned problems.

An objective of the present invention is to provide a device capable of timely and accurately detecting a change point of color to gray during hydrolysis of titanium oxysulfate in the sulfuric acid-process for manufacturing titanium white in real-time.

Another objective of the present invention is to provide an apparatus for controlling hydrolysis of titanium oxysulfate, which is capable of timely and accurately detecting a change point of color to gray during hydrolysis of titanium oxysulfate in the sulfuric acid-process for manufacturing titanium white in real-time and capable of controlling a hydrolysis process.

In an aspect of the present invention, there is provided a device for detecting hydrolysis of titanium oxysulfate in real-time as defined according to appended claim 1.

In the device for detecting hydrolysis of titanium oxysulfate in real-time according to the present invention, the detecting unit includes a probe including a sealed cylinder, an opaque inner wall, a transparent window, a light source optical fiber, a detecting optical fiber, an interference filter sheet, and a chopper; and a light-emitting element. The transparent window is disposed at an end of the cylinder. The light source optical fiber and the detecting optical fiber are disposed in the cylinder and parallel to each other in a direction perpendicular to a plane on which the transparent window is positioned. The interference filter sheet is fixed at front ends of the light source optical fiber and the detecting optical fiber in a direction parallel to the plane on which the transparent window is positioned. The chopper through which only incident light passes is interposed between the interference filter sheet and the transparent window, and is positioned only in front of the light source optical fiber.

In an exemplary embodiment of the device for detecting hydrolysis of titanium oxysulfate in real-time according to the present invention, the cylinder may be made of polytetrafluoroethylene, glass, quartz, corundum, Hastelloy alloy, carburized steel, or steel coated with a nano-anticorrosive layer.

In an exemplary embodiment of the device for detecting hydrolysis of titanium oxysulfate in real-time according to the present invention, the transparent window is made of light-transmitting glass or quartz.

In another aspect of the present disclosure there is provided an apparatus for controlling hydrolysis of titanium oxysulfate including a heating device, a stirring device, a detecting unit, an analyzing unit, and a control unit. The heating device is configured to heat a solution contained in a hydrolysis container. The stirring device is configured to stir the solution contained in the hydrolysis container. The detecting unit is disposed in the solution contained in the hydrolysis container and is connected to the analyzing unit to detect a reflectance of the solution in real-time and transmit a detected result to the analyzing unit. The analyzing unit analyzes a first derivative of the reflectance against hydrolysis time, and is connected to the control unit to transmit a control signal to the control unit when an inflection point of the first derivative occurs. The control unit stops operations of the heating device and the stirring device according to the control signal.

In one example of of the apparatus for controlling hydrolysis of titanium oxysulfate according to the present disclosure the detecting unit includes a probe including a sealed cylinder, an opaque inner wall, a transparent window, a light source optical fiber, a detecting optical fiber, a synchronous interference sheet, and a chopper; and a light-emitting element. The transparent window is disposed at an end of the cylinder. The light source optical fiber and the detecting optical fiber are disposed in the cylinder and parallel to each other in a direction perpendicular to a plane on which the transparent window is positioned. The interference filter sheet is fixed at front ends of the light source optical fiber and the detecting optical fiber in a direction parallel to the plane on which the transparent window is positioned. The chopper through which only incident light passes is interposed between the synchronous interference sheet and the transparent window, and is positioned only in front of the light source optical fiber.

In one example of the apparatus for controlling hydrolysis of titanium oxysulfate according to the present disclosure the cylinder is made of polytetrafluoroethylene, glass, quartz, corundum, Hastelloy alloy, carburized steel, or steel coated with a nano-anticorrosive layer.

In one example of the apparatus for controlling hydrolysis of titanium oxysulfate according to the present disclosure the transparent window is made of light-transmitting glass or quartz.

When compared with the related art, the present invention has an advantageous effect in that the change point of color to gray during hydrolysis of titanium oxysulfate can be accurately and timely detected in real-time, thereby optimizing the product quality, and reducing or eliminating difference in quality among various batches of products. Also, automatic detection in real-time and controlled hydrolysis is achieved in the present invention, thereby improving labor intensity and increasing hydrolysis efficiency.

### BRIEF DESCRIPTION OF THE DRAWINGS

FIG. 1 is a schematic view showing an apparatus for controlling hydrolysis of titanium oxysulfate according to the present disclosure;
FIG. 2 is a schematic view showing a detecting unit of a device for detecting hydrolysis of titanium oxysulfate in real-time according to an exemplary embodiment of the present invention;
FIG. 3 is a graph showing a change in reflected light according to time during the hydrolysis of titanium oxysulfate, measured by a device for detecting hydrolysis of titanium oxysulfate in real-time according to an exemplary embodiment of the present invention; and
FIG. 4 is a graph showing a first derivative of a reflectance against time, which corresponds to FIG. 3.

### Reference numerals designating major elements of the drawings:

1: probe; 2: analyzing unit; 3: hydrolysis tank; 4: control unit; 5: heating device; 6: stirring device; 7: light source optical fiber; 8: detecting optical fiber; 9: synchronous interference sheet; 10: opaque inner wall; 11: cylinder; 12: chopper; and 13: transparent window.

### DETAILED DESCRIPTION

Hereinafter, a device for detecting hydrolysis of titanium oxysulfate in real-time and an apparatus for controlling hydrolysis of titanium oxysulfate according to the present disclosure are described in detail in connection with the accompanying drawings.

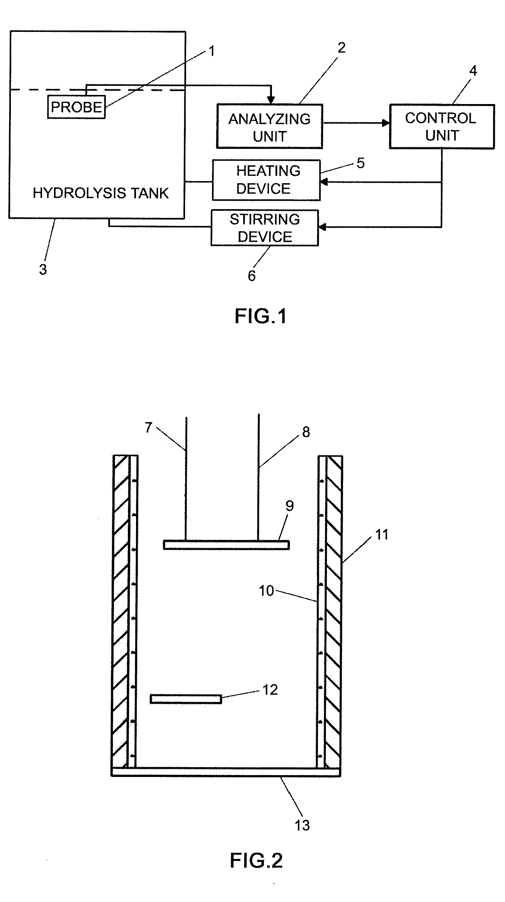

FIG. 1 is a schematic view showing an apparatus for controlling hydrolysis of titanium oxysulfate according to one example of the present disclosure.

Referring to FIG. 1, an apparatus for controlling hydrolysis of titanium oxysulfate includes a heating device 5, a stirring device 6, a probe 1, a light-emitting element (not shown), an analyzing unit 2, and a control unit 4. The heating device 5 is configured to heat a solution contained in a hydrolysis tank 3. The stirring device 6 is configured to stir the solution contained in the hydrolysis tank 3. The light-emitting element is configured to emit light having various wavelengths to the solution contained in the hydrolysis tank 3. The probe 1 is disposed in the solution contained in the hydrolysis tank 3 and is connected to the analyzing unit 2 to detect a reflectance of the solution in real-time and transmit a detected result to the analyzing unit 2. The analyzing unit 2 analyzes a first derivative of the reflectance against hydrolysis time, and is connected to the control unit 4 to transmit a control signal to the control unit 4 when an inflection point of the first derivative occurs. The control unit 4 stops operations of the heating device 5 and the stirring device 6 according to the control signal.

Also, the light-emitting element may be integrated into the control unit.

Also, the analyzing unit may be integrated into the control unit.

Although a component consisting of the light-emitting element and the probe and for detecting the reflectance of the solution contained in the hydrolysis tank and transmitting the detected result to the analyzing unit is described in the above example, those of ordinary skill in the art would realize that other component(s) capable of detecting the reflectance of the solution contained in the hydrolysis tank in real-time may also be used as the detecting unit according to the present disclosure.

FIG. 2 is a schematic view showing a detecting unit of a device for detecting hydrolysis of titanium oxysulfate in real-time according to an exemplary embodiment of the present invention.

Referring to FIG.2, in an apparatus for controlling hydrolysis of titanium oxysulfate according to an example of the present disclosure, a detecting unit may include a probe and a light-emitting element. The light-emitting element is a light source, is disposed in the control unit, and is connected to a light source optical fiber disposed in the probe to emit light to the solution contained in the hydrolysis tank. The probe 1 includes a sealed cylinder 11, an opaque inner wall 10, a transparent window 13, a light source optical fiber 7, a detecting optical fiber 8, a synchronous interference sheet 9, and a chopper 12. The transparent window 13 is disposed at an end of the cylinder 11. The light source optical fiber 7 and the detecting optical fiber 8 are disposed in the cylinder 11 and parallel to each other in a direction perpendicular to a plane on which the transparent window 13 is positioned. The synchronous interference sheet 9 is fixed at front ends of the light source optical fiber 7 and the detecting optical fiber 8 in a direction parallel to the plane on which the transparent window 13 is positioned. The chopper 12 is interposed between the synchronous interference sheet 9 and the transparent window 13, and is positioned only in front of the light source optical fiber 7 to allow only incident light to pass therethrough. The light source optical fiber 7 introduces light into the probe 1, the synchronous interference sheet 9 filters light reflected primarily and secondarily on the transparent window 13 at the end of the cylinder 11 so that light transmitting therethrough is not affected by the reflected light, and the chopper 12 regulates the light signal. The detecting optical fiber 8 detects light reflected by the solution. The probe according to the present embodiment can conveniently and rapidly monitor a change in the solution and transmit a signal to the analyzing unit, the analyzing unit analyzes the signal and sends data to the control unit, and the control unit sends a command upon reception of the data, thereby controlling the system.

The cylinder 11 may be made of polytetrafluoroethylene, glass, quartz, corundum, Hastelloy alloy, carburized steel, or steel coated with a nano-anticorrosive layer. The transparent window 13 may be made of light-transmitting glass or quartz.

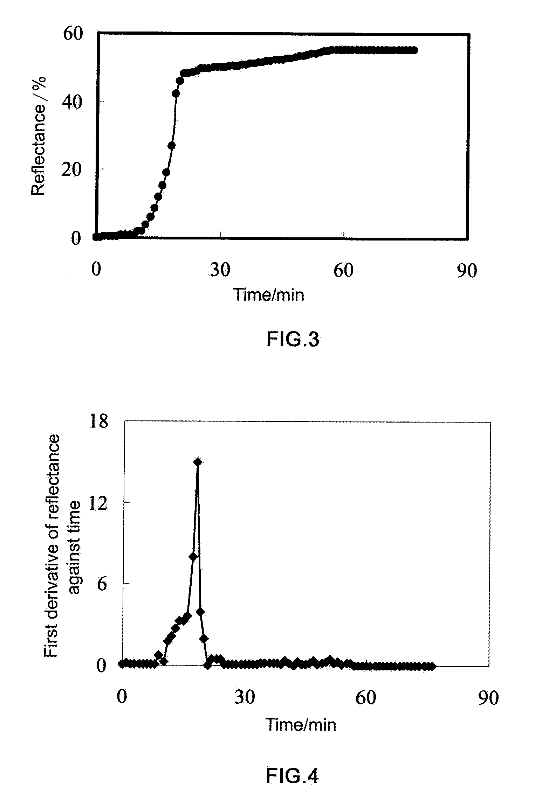

FIG. 3 is a graph showing a change in reflected light according to time during the hydrolysis of titanium oxysulfate, measured by a device for detecting hydrolysis of titanium oxysulfate in real-time according to an exemplary embodiment of the present invention. FIG. 4 is a graph showing a first derivative of a reflectance against time, which corresponds to FIG. 3. Referring to FIGS. 3 and 4, when an inflection point of the graph of the first derivative of the reflectance against time occurs, a change point of color to gray occurs in the solution contained in the hydrolysis tank. For example, in the present exemplary embodiment, in a case where a reflectance of a solution contained in the hydrolysis tank before being heated to be boiled for the first time is considered as a reference value, the change point of color to gray generally occurs in the titaniferous solution when the reflectance detected by the detecting optical fiber reaches 20%-30% of the reference value.

FIGS. 1 and 2 also show a device for detecting hydrolysis of titanium oxysulfate in real-time according to an exemplary embodiment of the present invention. Referring to FIGS. 1 and 2, in an exemplary embodiment of the present invention, the device for detecting hydrolysis of titanium oxysulfate in real-time includes a detecting unit consisting of a probe and a light-emitting unit (not shown), and an analyzing unit. The probe is disposed in a solution contained in a hydrolysis tank and is connected to the analyzing unit to detect a reflectance of the solution in real-time and transmit a detected result to the analyzing unit. The analyzing unit analyzes a first derivative of the reflectance against hydrolysis time, and determines that a change point of color to gray occurs when an inflection point of the first derivative occurs. The detecting unit has a particular structure described above. As for the device for detecting hydrolysis of titanium oxysulfate in real-time according to the present exemplary embodiment, in a case where a reflectance of a solution contained in the hydrolysis tank before being heated to be boiled for the first time is considered as a reference value, the change point of color to gray generally occurs in the solution when the reflectance detected by the detecting optical fiber reaches 20%-30% of the reference value.

Examples of preparation of rutile-type titanium white using the device for detecting hydrolysis of titanium oxysulfate in real-time and the apparatus for controlling hydrolysis of titanium oxysulfate according to the present disclosure are illustrated below. Structures and functions of the device for detecting hydrolysis of titanium oxysulfate in real-time and the apparatus for controlling hydrolysis of titanium oxysulfate according to the present disclosure will be more apparent through the Examples.

### Example 1

Deionized water having a volume of 25% of a volume of a titaniferous solution was taken and added to a hydrolysis tank as base water, and preheated to 95±1 °C. The titaniferous solution having a temperature of 95±1 °C contained in a preheating tank was then transferred to the hydrolysis tank by a pump for 16-20 min, while maintaining the system at 95±1 °C. After addition of the titaniferous solution, reflectance of the solution contained in the hydrolysis tank was detected in real-time by using the device for detecting hydrolysis of titanium oxysulfate in real-time according to the present invention. A reflectance of the solution contained in the hydrolysis tank before being heated to be boiled for the first time (i.e. the solution at the time when the addition of the titaniferous solution was completed) was considered as a reference value, i.e. a base value. The solution was heated to be boiled for the first time at a rate of 1.0 °C/min, and was then maintained in a slightly boiling state. When the analyzing unit showed that the derivative of the detected reflectance represents an inflection point abruptly, a change point of color to gray occurred. The analyzing unit output a control signal to the control unit, which then sent commands to the heating device and the stirring device, respectively, to stop heating and stirring the solution contained in the hydrolysis tank. The system was aged for 30 min. After that, the control unit output a signal to stir and heat the system for 15-20 min to be boiled for the second time, and the system was then maintained in a slightly boiling state for 90 min. After that, the system was diluted to a concentration of 165 g/L by adding water for diluting having a temperature of 80-90 °C to the system for 120 min (that is, it took 2 hours in total from the start of addition of the water for diluting to the end of addition of the water for diluting). After completing addition of the water for diluting, the hydrolysis process was ended.

### Example 2

Titanium dioxide prepared from 2% of a titaniferous solution, as anatase crystal seeds, was added to the titaniferous solution which had been preheated up to 85-90 °C, and the titaniferous solution was maintained to have a concentration of about 200 g/L. Reflectance of the solution was then detected as a zero reference. The solution was heated to be boiled for the first time at a rate of 0.5 °C/min, and was then maintained in a slightly boiling state. When the analyzing unit showed that the derivative of the detected reflectance represents an inflection point abruptly, a change point of color to gray occurred. The analyzing unit output a control signal to the control unit, which then sent a command to stop heating and stirring the solution contained in the hydrolysis tank. The system was aged for 30 min. After that, the control unit output a signal to stir and heat the system for 25-30 min to be boiled for the second time, and the system was then maintained in a slightly boiling state for 90 min. After that, the system was diluted to a concentration of 165 g/L by adding water for diluting having a temperature of 80-90 °C to the system for 120 min. After completing addition of the water for diluting, the hydrolysis process was ended.

While the device for detecting hydrolysis of titanium oxysulfate in real-time and the apparatus for controlling hydrolysis of titanium oxysulfate according to the present disclosure have been described above in connection with the accompanying drawings and exemplary examples, it is to be understood by those of ordinary skill in the art that various modifications may be made therein without departing from the scope of the present invention as set forth in the following claims.

## Claims

1. A device for detecting hydrolysis of titanium oxysulfate in real-time **characterized in that** it comprises:
a detecting unit; and
an analyzing unit (2),
wherein the detecting unit is disposed in a solution contained in a hydrolysis container (3) and is connected to the analyzing unit (2) to detect a reflectance of the solution in real-time and transmit a detected result to the analyzing unit (2); and
wherein the analyzing unit (2) is configured to analyse a first derivative of the reflectance against hydrolysis time, and to determine that a change point of color to gray occurs when an inflection point of the first derivative occurs; and
wherein the detecting unit comprises:
a probe (1) comprising a sealed cylinder (11), an opaque inner wall (10), a transparent window (13), a light source optical fiber (7), a detecting optical fiber (8), an interference filter sheet (9), and a chopper (12); and
a light-emitting element,
wherein the transparent window (13) is disposed at an end of the cylinder (11);
wherein the light source optical fiber (7) and the detecting optical fiber (8) are disposed in the cylinder (11) and parallel to each other in a direction perpendicular to a plane on which the transparent window (13) is positioned;
wherein the interference filter sheet (9) is fixed at front ends of the light source optical fiber (7) and the detecting optical fiber (8) in a direction parallel to the plane on which the transparent window (13) is positioned; and
wherein the chopper (12) through which only incident light passes is interposed between the interference filter sheet (9) and the transparent window (13), and is positioned only in front of the light source optical fiber (7).

2. The device for detecting hydrolysis of titanium oxysulfate in real-time according to claim 1, wherein the cylinder (11) is made of polytetrafluoroethylene, glass, quartz, corundum, Hastelloy alloy, carburized steel, or steel coated with a nano-anticorrosive layer.

3. The device for detecting hydrolysis of titanium oxysulfate in real-time according to claim 1, wherein the transparent window (13) is made of light-transmitting glass or quartz.

4. The device for detecting hydrolysis of titanium oxysulfate according to one of the preceding claims whereby it comprises an apparatus for controlling hydrolysis of titanium oxysulfate including a heating device (5), a stirring device (6), a detecting unit, an analyzing unit (2), and a control unit (4),
wherein the heating device (5) is configured to heat a solution contained in a hydrolysis container (3);
wherein the stirring device (6) is configured to stir the solution contained in the hydrolysis container (3);
wherein the detecting unit is disposed in the solution contained in the hydrolysis container (3) and is connected to the analyzing unit (2) to detect a reflectance of the solution in real-time and transmit a detected result to the analyzing unit (2);
wherein the analyzing unit (2) is configured to analyse a first derivative of the reflectance against hydrolysis time, and is connected to the control unit (4) to transmit a control signal to the control unit (4) when an inflection point of the first derivative occurs; and
wherein the control unit (4) stops operations of the heating device (5) and the stirring device (6) according to the control signal.

5. The device for detecting hydrolysis of titanium oxysulfate according to claim 4,
wherein the detecting unit comprises:
a probe (1) comprising a sealed cylinder (11), an opaque inner wall (10), a transparent window (13), a light source optical fiber (7), a detecting optical fiber (8), a synchronous interference sheet (9), and a chopper (12); and
a light-emitting element,
wherein the transparent window (13) is disposed at an end of the cylinder (11);
wherein the light source optical fiber (7) and the detecting optical fiber (8) are disposed in the cylinder (11) and parallel to each other in a direction perpendicular to a plane on which the transparent window (13) is positioned;
wherein the synchronous interference sheet (9) is fixed at front ends of the light source optical fiber (7) and the detecting optical fiber (8) in a direction parallel to the plane on which the transparent window (13) is positioned; and
wherein the chopper (12) is interposed between the synchronous interference sheet (9) and the transparent window (13), and is positioned only in front of the light source optical fiber (7) to allow only incident light to pass therethrough.

6. The device for detecting hydrolysis of titanium oxysulfate according to claim 5, wherein the cylinder (11) is made of polytetrafluoroethylene, glass, quartz, corundum, Hastelloy alloy, carburized steel, or steel coated with a nano-anticorrosive layer.

7. The device for detecting hydrolysis of titanium oxysulfate according to claim 5, wherein the transparent window (13) is made of light-transmitting glass or quartz.

## Patentansprüche

1. Vorrichtung zum Detektieren von Hydrolyse von Titanoxysulfat in Echtzeit, **dadurch gekennzeichnet, dass** sie umfasst:
eine Detektionseinheit; und
eine Analyseeinheit (2),
wobei die Detektionseinheit in einer Lösung, welche in einem Hydrolysebehälter (3) enthalten ist, angeordnet und mit der Analyseeinheit (2) verbunden ist, um eine Reflektanz der Lösung in Echtzeit zu detektieren und ein detektiertes Ergebnis an die Analyseeinheit (2) zu übermitteln; und
wobei die Analyseeinheit (2) dazu eingerichtet ist, um eine erste Ableitung der Reflektanz als Funktion der Hydrolysezeit zu analysieren und um zu bestimmen, dass ein Farbumschlagspunkt zu Grau auftritt, wenn ein Wendepunkt der ersten Ableitung auftritt; und
wobei die Detektionseinheit aufweist:
eine Sonde (1), welche einen verschlossenen Zylinder (11), eine opake innere Wand (10), ein transparentes Fenster (13), eine Lichtquellenlichtleitfaser (7), eine Detektionslichtleitfaser (8), eine Interferenzfilterschicht (9) und einen Chopper (12) aufweist; und
ein Licht-emittierendes Element,
wobei das transparente Fenster (13) an einem Ende des Zylinders (11) angeordnet ist;
wobei die Lichtquellenlichtleitfaser (7) und die Detektionslichtleitfaser (8) in dem Zylinder (11) und parallel zueinander in einer zu einer Ebene, in welcher das transparente Fenster (13) positioniert ist, senkrechten Richtung angeordnet sind; und
wobei die Interferenzfilterschicht (9) an vorderen Enden der Lichtquellenlichtleitfaser (7) und der Detektionslichtleitfaser (8), in einer zu der Ebene, in welcher das transparente Fenster (13) positioniert ist, parallelen Richtung befestigt ist; und
wobei der Chopper (12), durch den nur Auflicht strahlt, zwischen der Interferenzfilterschicht (9) und dem transparenten Fenster (13) angeordnet und nur vor der Lichtquellenlichtleitfaser (7) positioniert ist.

2. Vorrichtung zum Detektieren von Hydrolyse von Titanoxysulfat in Echtzeit gemäß Anspruch 1, wobei der Zylinder (11) aus Polytetrafluorethylen, Glas, Quarz, Korund, Hastelloy-Legierung, einsatzgehärtetem Stahl oder Stahl beschichtet mit einer nanoantikorrosiven Schicht gebildet ist.

3. Vorrichtung zum Detektieren von Hydrolyse von Titanoxysulfat in Echtzeit gemäß Anspruch 1, wobei das transparente Fenster (13) aus lichtdurchlässigem Glas oder Quartz gebildet ist.

4. Vorrichtung zum Detektieren von Hydrolyse von Titanoxysulfat gemäß einem der vorhergehenden Ansprüche, wobei die Vorrichtung eine Vorrichtung zum Steuern/Regeln von Hydrolyse von Titanoxysulfat aufweist, welche eine Heizvorrichtung (5), eine Rührvorrichtung (6), eine Detektionseinheit, eine Analyseeinheit (2) und eine Steuer/Regeleinheit (4) beinhaltet,
wobei die Heizvorrichtung (5) dazu eingerichtet ist, eine in einem Hydrolysebehälter (3) enthaltende Lösung zu erhitzen;
wobei die Rührvorrichtung (6) dazu eingerichtet ist, die in dem Hydrolysebehälter (3) enthaltende Lösung zu rühren;
wobei die Detektionseinheit in der Lösung, welche in dem Hydrolysebehälter (3) enthalten ist, angeordnet und mit der Analyseeinheit (2) verbunden ist, um eine Reflektanz der Lösung in Echtzeit zu detektieren und ein detektiertes Ergebnis an die Analyseeinheit (2) zu übermitteln;
wobei die Analyseeinheit (2) dazu eingerichtet ist, um eine erste Ableitung der Reflektanz als Funktion der Hydrolysezeit zu analysieren und mit der Steuer/Regeleinheit (4) verbunden ist, um ein Steuerungs/Regelsignal an die Steuer/Regeleinheit (4) zu übermitteln, wenn ein Wendepunkt der ersten Ableitung auftritt; und
wobei die Steuer/Regeleinheit (4) Betrieb der Heizvorrichtung (5) und der Rührvorrichtung (6) entsprechend des Steuerungs/Regelsignals anhält.

5. Vorrichtung zum Detektieren von Hydrolyse von Titanoxysulfat gemäß Anspruch 4, wobei die Detektionseinheit aufweist:
eine Sonde (1), welche einen verschlossenen Zylinder (11), eine opake innere Wand (10), ein transparentes Fenster (13), eine Lichtquellenlichtleitfaser (7), eine Detektionslichtleitfaser (8), eine synchrone Interferenzschicht (9) und einen Chopper (12) aufweist; und
ein Licht-emittierendes Element,
wobei das transparente Fenster (13) an einem Ende des Zylinders (11) angeordnet ist;
wobei die Lichtquellenlichtleitfaser (7) und die Detektionslichtleitfaser (8) in dem Zylinder (11) und parallel zueinander in einer zu einer Ebene, in welcher das transparente Fenster (13) positioniert ist, senkrechten Richtung angeordnet sind; und
wobei die synchrone Interferenzschicht (9) an vorderen Enden der Lichtquellenlichtleitfaser (7) und der Detektionslichtleitfaser (8), in einer zu der Ebene, in welcher das transparente Fenster (13) positioniert ist, parallelen Richtung befestigt ist; und
wobei der Chopper (12) zwischen der synchronen Interferenzschicht (9) und dem transparenten Fenster (13) angeordnet und nur vor der Lichtquellenlichtleitfaser (7) positioniert ist, um nur Auflicht durch den Chopper strahlen zu lassen.

6. Vorrichtung zum Detektieren von Hydrolyse von Titanoxysulfat gemäß Anspruch 5, wobei der Zylinder (11) aus Polytetrafluorethylen, Glas, Quarz, Korund, Hastelloy-Legierung, einsatzgehärtetem Stahl oder Stahl beschichtet mit einer nanoantikorrosiven Schicht gebildet ist.

7. Vorrichtung zum Detektieren von Hydrolyse von Titanoxysulfat gemäß Anspruch 5, wobei das transparente Fenster (13) aus lichtdurchlässigem Glas oder Quartz gebildet ist.

## Revendications

1. Dispositif de détection de l'hydrolyse d'oxysulfate de titane en temps réel, **caractérisé en ce qu'**il comprend :
une unité de détection ; et
une unité d'analyse (2),
l'unité de détection étant disposée dans une solution contenue dans un récipient d'hydrolyse (3) et étant reliée à l'unité d'analyse (2) pour détecter un facteur de réflexion de la solution en temps réel et transmettre un résultat détecté à l'unité d'analyse (2) ; et
l'unité d'analyse (2) étant configurée pour analyser une première dérivée du facteur de réflexion en fonction du temps d'hydrolyse, et pour déterminer qu'un point de changement de couleur vers le gris apparaît quand un point d'inflexion de la première dérivée apparaît ; et
l'unité de détection comprenant :
une sonde (1) comprenant un cylindre scellé (11), une paroi interne opaque (10), une fenêtre transparente (13), une fibre optique source de lumière (7), une fibre optique de détection (8), une feuille de filtre d'interférence (9), et un hacheur (12) ; et
un élément émetteur de lumière,
la fenêtre transparente (13) étant disposée à une extrémité du cylindre (11) ;
la fibre optique source de lumière (7) et la fibre optique de détection (8) étant disposées dans le cylindre (11) et parallèles l'une à l'autre dans une direction perpendiculaire à un plan sur lequel est positionnée la fenêtre transparente (13) ;
la feuille de filtre d'interférence (9) étant fixée aux extrémités avant de la fibre optique source de lumière (7) et de la fibre optique de détection (8) dans une direction parallèle au plan sur lequel est positionnée la fenêtre transparente (13) ; et
le hacheur (12) à travers lequel seule passe la lumière incidente étant intercalé entre la feuille de filtre d'interférence (9) et la fenêtre transparente (13), et étant positionné uniquement devant la fibre optique source de lumière (7).

2. Dispositif de détection de l'hydrolyse d'oxysulfate de titane en temps réel selon la revendication 1, dans lequel le cylindre (11) est constitué de polytétrafluoroéthylène, verre, quartz, corindon, alliage Hastelloy, acier au carbure, ou acier recouvert d'une nanocouche anticorrosion.

3. Dispositif de détection de l'hydrolyse d'oxysulfate de titane en temps réel selon la revendication 1, dans lequel la fenêtre transparente (13) est constituée de verre ou quartz transmettant la lumière.

4. Dispositif de détection de l'hydrolyse d'oxysulfate de titane selon une des revendications précédentes, qui comprend un appareil de contrôle de l'hydrolyse d'oxysulfate de titane comportant un dispositif de chauffage (5), un dispositif d'agitation (6), une unité de détection, une unité d'analyse (2), et une unité de commande (4),
le dispositif de chauffage (5) étant configuré pour chauffer une solution contenue dans un récipient d'hydrolyse (3) ;
le dispositif d'agitation (6) étant configuré pour agiter la solution contenue dans le récipient d'hydrolyse (3) ;
l'unité de détection étant disposée dans la solution contenue dans le récipient d'hydrolyse (3) et étant reliée à l'unité d'analyse (2) pour détecter un facteur de réflexion de la solution en temps réel et transmettre un résultat détecté à l'unité d'analyse (2) ;
l'unité d'analyse (2) étant configurée pour analyser une première dérivée du facteur de réflexion en fonction du temps d'hydrolyse, et étant reliée à l'unité de commande (4) pour transmettre un signal de commande à l'unité de commande (4) quand un point d'inflexion de la première dérivée apparaît ; et
l'unité de commande (4) coupant le fonctionnement du dispositif de chauffage (5) et du dispositif d'agitation (6) en fonction du signal de commande.

5. Dispositif de détection de l'hydrolyse d'oxysulfate de titane selon la revendication 4, dans lequel l'unité de détection comprend :
une sonde (1) comprenant un cylindre scellé (11), une paroi interne opaque (10), une fenêtre transparente (13), une fibre optique source de lumière (7), une fibre optique de détection (8), une feuille d'interférence synchrone (9) et un hacheur (12) ; et
un élément émetteur de lumière,
la fenêtre transparente (13) étant disposée à une extrémité du cylindre (11) ;
la fibre optique source de lumière (7) et la fibre optique de détection (8) étant disposées dans le cylindre (11) et parallèles l'une à l'autre dans une direction perpendiculaire à un plan sur lequel est positionnée la fenêtre transparente (13) ;
la feuille d'interférence synchrone (9) étant fixée aux extrémités avant de la fibre optique source de lumière (7) et de la fibre optique de détection (8) dans une direction parallèle au plan sur lequel est positionnée la fenêtre transparente (13) ; et
le hacheur (12) étant intercalé entre la feuille d'interférence synchrone (9) et la fenêtre transparente (13), et étant positionné uniquement devant la fibre optique source de lumière (7) pour laisser passer uniquement la lumière incidente.

6. Dispositif de détection de l'hydrolyse d'oxysulfate de titane selon la revendication 5, dans lequel le cylindre (11) est constitué de polytétrafluoroéthylène, verre, quartz, corindon, alliage Hastelloy, acier au carbure, ou acier recouvert d'une nanocouche anticorrosion.

7. Dispositif de détection de l'hydrolyse d'oxysulfate de titane selon la revendication 5, dans lequel la fenêtre transparente (13) est constituée de verre ou quartz transmettant la lumière.
